Europäisches Patentamt

European Patent Office

Office européen des brevets

(19)

(11) Veröffentlichungsnummer: **0 287 775 B1**

(12) **EUROPÄISCHE PATENTSCHRIFT**

(45) Veröffentlichungstag der Patentschrift: **27.12.91**

(51) Int. Cl.⁵: **H01G 1/02**

(21) Anmeldenummer: **88102631.4**

(22) Anmeldetag: **23.02.88**

(54) **Kondensator im Kunststoffbecher und Verfahren zu seiner Herstellung.**

(30) Priorität: **24.02.87 DE 3705868**

(43) Veröffentlichungstag der Anmeldung:
**26.10.88 Patentblatt 88/43**

(45) Bekanntmachung des Hinweises auf die
Patenterteilung:
**27.12.91 Patentblatt 91/52**

(84) Benannte Vertragsstaaten:
**AT CH DE ES FR GB IT LI**

(56) Entgegenhaltungen:
**DE-A- 1 514 514**
**DE-A- 3 130 837**
**DE-A- 3 216 192**
**DE-A- 3 328 787**
**GB-A- 1 071 820**

(73) Patentinhaber: **SIEMENS AKTIENGESELL-
SCHAFT**
**Wittelsbacherplatz 2**
**W-8000 München 2(DE)**

(72) Erfinder: **Utner, Ferdinand**
**Roter Brachweg 99**
**W-8400 Regensburg(DE)**

Rank Xerox (UK) Business Services

## Beschreibung

Die Erfindung betrifft einen elektrischen Kondensator mit wenigstens nahezu rechteckigem Querschnitt, der zentriert und justiert in einem Gehäuse in Form eines mit einer Öffnung versehenen Kunststoffbechers, der Auswölbungen in wenigstens zwei gegenüberliegenden Seitenflächen besitzt, mit rechteckigem Querschnitt untergebracht ist, Stromzuführungsdrähte aufweist, die aus der Öffnung des Kunststoffbechers in Richtung der Öffnung herausragen und in dem Kunststoffbecher mit ausgehärtetem Material festgelegt ist.

Die Erfindung betrifft ferner Verfahren zur Herstellung eines solchen elektrischen Kondensators, bei denen der Kondensator in einen vorgefertigten Kunststoffbecher mit rechteckigem Querschnitt eingesetzt, die Hohlräume zwischen Kunststoffbecher und Kondensator mit flüssigem, aushärtbarem Vergußmaterial ausgefüllt werden und dieses Vergußmaterial danach ausgehärtet wird.

Es ist bekannt, Kondensatoren mit einem Becher zu versehen. So ist in der DE-GM 67 53 341 ein Elektrolytkondensator mit in einem Metallbecher mit rundem Querschnitt untergebrachten Folienwickel beschrieben. Der Metallbecher dient dabei nicht nur als Schutz für den Folienwickel, sondern auch als die eine Elektrode des Kondensators. Um den Becher am Wickel festzulegen, wird der Becher am Mantel und/oder am Boden mit Eindrückungen versehen. Durch diese Eindrückungen soll verhindert werden, daß bei Erschütterungen, wie sie beispielsweise in Kraftfahrzeugen oder beim Gebrauch anderer Geräte auftreten, der Becher sich vom Wickel löst und dabei der Anschluß der einen Wickelelektrode vom Becher durch Vibration gelöst wird.

In dem DE-GM 19 26 788 ist ein elektrischer Kondensator, insbesondere mit einem zylinderförmigen Metallgehäuse,beschrieben, welches annähernd in der Mitte des Gehäuses einen sickenartigen Vorsprung aufweist. Durch diesen sickenartigen Vorsprung soll ermöglicht werden, daß die dadurch gebildeten beiden Teilräume mit Gießharz ausgefüllt werden können, wobei erst der eine Teil mit Gießharz gefüllt wird, und nach dem Aushärten desselben der zweite Teil des Gehäuses mit dem Gießharz ausgefüllt wird. Ein entsprechender Kondensator ist auch in der GB-PS 1 071 820 beschrieben.

In der DE-PS 12 99 073 ist ein Verfahren zum Einbau eines elektrischen Kondensators mit stirnseitigen Kontaktflächen in ein becherartiges Gehäuse beschrieben. Bei diesem Verfahren werden elektrische Anschlußelemente zunächst durch die Gehäusewandung hindurchgeführt, dann mit den stirnseitigen Kontaktflächen des außerhalb des Gehäuses befindlichen Kondensators verbunden und danach zusammen mit dem Kondensator in das Gehäuse eingeschoben. Der Nachteil dieses Verfahrens ist, daß das Durchfädeln der Anschlußelemente durch die Gehäusewandung hindurch einen erheblichen technischen Aufwand erfordert und sehr störanfällig ist. Denn, da beim späteren Vergießen das Gießharz sehr dünnflüssig wird, müssen die in der Gehäusewandung vorgesehenen Löcher für die Anschlußelemente klein bemessen sein, da sonst das Gießharz durch diese Löcher auslaufen würde. Für ein rasches Einfädeln der Anschlußelemente wiederum sollten die Löcher möglichst groß bemessen sein. Durch diesen Widerspruch ergibt sich die bereits erwähnte große Störanfälligkeit dieses Verfahrens.

In dem DE-GM 70 21 001 ist ein Kondensator mit radial angebrachten Anschlußdrähten in einem prismatischen Gehäuse, vorzugsweise aus thermoplastischen Kunststoffen, beschrieben. An dieses Gehäuse sind zunächst nach oben stehende, gabelförmige Haltelaschen angespritzt, welche nach dem Einsetzen des Kondensators um mindestens 90° in den Gehäuseinnenraum gebogen werden und mit ihren Gabeln die Anschlußdrähte fixieren. Aufgabe dieser Gabeln ist es, die Einhaltung eines genauen Rastermaßes, also eines bestimmten Abstandes der Anschlußdrähte voneinander, zu gewährleisten. Eine Fixierung des Kondensators im Gehäuse geschieht dabei nur mittelbar über die Drähte des Kondensators, während eine Zentrierung des Kondensators innerhalb des Gehäuses praktisch nicht eintritt. Nachteilig ist hierbei, daß die in den Becher gebogenen Lappen einen unzulässig großen Einbauraum benötigen, welcher für den Wickel nicht mehr genutzt werden kann. Außerdem schränkt die für das Umbiegen benötigte Elastizität die Materialauswahl ein, so daß nicht die preiswertesten Materialien (Kunststoffe) eingesetzt werden können.

In dem DE-GM 19 11 606 ist ein vorzugsweise rechteckiger Kunststoffbecher für mit Abdichtungsmasse feuchtigkeitssicher umgossene Kondensatorenwickel mit parallelen Anschlußleitungen beschrieben. Dieser Becher weist an den Innenseiten gegenüberliegender Becherwandungen flexible Längsrippen auf, wodurch gewährleistet wird, daß der Wickel zur Erzielung eines ausreichenden Feuchtigkeitsschutzes allseitig mit einer genügend dicken Schicht, etwa eines Gießharzes, im Becher umhüllt ist. Der Nachteil dieser Längsrippen besteht darin, daß sie sich einerseits spritztechnisch nur schwer realisieren lassen, beispielsweise wegen der auftretenden Entformung, und andererseits nur kleine Toleranzen zwischen Bauelementelänge und Becherinnenlänge federnd ausgleichen können. Auch hierfür gelten wegen der elastischen Rippen dieselben (wie unter DE-GM 70 21 001 aufgeführten) Nachteile.

Aus der US-PS 3 806 766 ist ein elektrisches Bauteil und ein Verfahren zu seiner Herstellung bekannt, bei dem die Bauteile in ein Gehäuse eingeführt sind. Das Gehäuse weist dabei Aussparungen auf, in denen die Anschlußdrähte der elektrischen Bauteile geführt werden. Aufgrund der Federspannung der Anschlußdrähte wird das Bauelement bis zum Erstarren des später eingefüllten Gießharzes gehalten. Wiederum erfolgt hier die Fixierung des Bauelementes nur mittelbar über die Anschlußdrähte, während eine unmittelbare Fixierung über Lippen oder ähnliche Hilfsmittel nicht vorliegt. Allerdings ist eine Verklemmung über Drähte nur in einem sehr kleinen Toleranz-Bereich ( 0,1 mm) möglich und hat, je nach Drahtform, ebenfalls Einbauraumverlust zur Folge.

Nach der EP-PS 0 062 167 ist ein elektrischen Bauelement, das zentriert und justiert in einem Gehäuse untergebracht ist, bekannt. Das elektrische Bauelement ist in einem einen rechteckigen Querschnitt aufweisenden Becher untergebracht. Die Stromzuführungsdrähte des Bauelementes ragen aus der Öffnung des Bechers in gleicher Richtung heraus. Der Becher weist wenigstens zwei an gegenüberliegenden Seiten einstückig angeformte Laschen aus dem gleichen Material auf, wobei diese Laschen in das Innere des Bechers umgebogen sind und durch ihre Federkraft das Bauelement klemmend halten und beim Vergießen mit Vergußmaterial und Aushärten desselben als Zentrierung und Justierung des Bauelementes dienen. Obwohl in derartigen Bechern enthaltene Bauelemente in erheblichen Stückzahlen von vielen Millionen auf den Markt gebracht wurden, ist festzustellen, daß die erwähnten Laschen die Herstellung des Bechers verteuern und daß darüberhinaus das Umbiegen der Laschen vor dem Einführen des Kondensators einen gleichfalls verteuernden, zusätzlichen Fertigungsschritt notwendig macht und einen großen Einbauraumverlust (vor allem bei kleinen Rastermaßen, wie z.B. RM 5), für die Wickeldimensionierung zur Folge hat.

Aus der DE-OS 32 16 192 ist es bekannt, ein elektrisches Bauelement zentriert und justiert in einem Gehäuse in Form eines einen rechteckigen Querschnitt aufweisenden Bechers unterzubringen. Der Becher ist hierbei an gegenüberliegenden Seiten mit Wölbungen versehen, welche einen klemmenden Halt des Bauelementes bewirken. Nachteilig bei diesem Becher ist, daß das Einführen eines Bauelementes, beispielsweise eines Kondensators, ein Aufspreizwerkzeug, welches die nach innen gewölbten Wände des Bechers zum Einfädeln des Bauelementes auseinanderspreizt, erforderlich macht.

In der italienischen Patentanmeldung 35 50 A/82, die seit dem 30.03.1984 als veröffentlicht gilt, sind Verfahren zur Verankerung von kapazitiven Elementen bekannt. So ist es bekannt, ein kapazitives Element an einem Gehäuse dadurch zu befestigen, daß flüssiges thermoplastisches Material mit einer über dessen Erstarrungspunkt liegenden Temperatur und in einer geringen und das Gehäuse nur zum Teil füllenden Menge einzubringen, dann das elektrische Bauelement in das Gehäuse einzusetzen und dann durch Kühlung des genannten Materials und der daraus folgenden Erstarrung das kapazitive Element am Gehäuse zu befestigen. Es ist aus dieser Patentanmeldung gleichfalls bekannt, mittels an das Gehäuse angebrachter Laschen, die nach dem Einführen des kapazitiven Elementes in das Gehäuse umgebogen werden, dieses kapazitive Element im Gehäuse zu befestigen. Die Laschen können dabei entweder an den Schmalseiten oder an den Breitseiten des Gehäuses angebracht sein.

Darüberhinaus ist es aus dieser Patentanmeldung bekannt, zumindest einen Teilbereich der Seitenwände des Gehäuses nach dem Inneren dieses Gehäuses bis zum Anliegen an das kapazitive Element plastisch zu verformen. Der Verformung kann dabei eine soweit reichende Erwärmung des zu verformenden Teilbereiches vorangehen, daß letzterer plastisch verformbar wird. Diese Verformungen können beispielsweise einem Stromzuführungsdraht paarweise symmetrisch zugeordnet sein.

Weiterhin ist es aus dieser Patentanmeldung bekannt, an den Stromzuführungsdrähten Ausbiegungen vorzusehen, die bezüglich der Stirnflächen des Kondensators in Längsrichtung oder in Querrichtung über die Stirnflächen hinausgehen und, gegebenenfalls über zusätzlich im Gehäuse vorhandene Aussparungen, die ein Einrasten der Ausbuchtungen der Stromzuführungen bewirken, einen festen Sitz des kapazitiven Elementes im Gehäuse zur Folge haben. Nachteilig ist die Toleranzempfindlichkeit, d.h. die auftretende Toleranz zwischen Becher, Wickel und Draht kann größer sein als das durch die Drahtelastizität abfangbare Maß.

Jedes der Verfahren in dieser italienischen Patentanmeldung dient dazu, das kapazitive Element genau in der Lage im Becher zu fixieren, in der es in den Becher eingebracht worden ist. Das Zentrieren erfolgt also auch hier indirekt, indem die Anschlußdrähte des kapazitiven Elementes durch exakt geführte Klemmen fixiert werden. Verbogene Drähte haben damit eine ungenaue Zentrierung des Bauelementes zur Folge. Dieser Fehler bleibt erhalten, wenn anschließend Teilbereiche der Seitenwände des Gehäuses bis zum Anliegen am kapazitiven Element verformt werden.

Aufgabe der Erfindung ist es, einen Kondensator sowie ein Verfahren zu seiner Herstellung anzugeben, wobei der Kondensator in einem keinerlei zusätzliche Laschen oder Führungsrippen aufweisenden Becher gleichzeitig fixiert und zentriert ist und die Becherinnenmaße - unabhängig von der Wickeltoleranz - voll für den Wickel genutzt werden können, so daß durch die Befestigung kein Einbauraum verloren geht.

Zur Lösung dieser Aufgabe ist der Kondensator der eingangs angegebenen Art erfindungsgemäß durch die Merkmale des zweiten Teils von Anspruch 1 gekennzeichnet.

Eine bevorzugte Ausführungsform des erfindungsgemäßen Kondensators ist dadurch gekennzeichnet, daß der Kondensator durch im Bereich der Einprägungen erhöhte Materialstärke des Kunststoffbechers zentriert und fixiert ist. Dies gewährleistet, daß ohne Aufreißen der Becherwände auch kleine Wickel - z.B. am unteren Toleranzspektrum liegende Wickel - durch tiefe Einprägungen erfaßt werden.

Ein Verfahren der eingangs angegebenen Art zur Herstellung eines solchen Kondensators ist erfindungsgemäß dadurch gekennzeichnet, daß nach dem Einsetzen des Kondensators in den Kunststoffbecher zunächst zentrierende Einprägungen in wenigstens zwei Seitenflächen oder wenigstens zwei Kanten des Kunststoffbechers erzeugt werden, durch die der Kondensator zentriert und fixiert wird, wonach die weiteren Verfahrensschritte des Ausfüllens mit Vergußmaterial und des Aushärtens desselben erfolgen.

Ein anderes Verfahren der ebenfalls eingangs angegebenen Art zur Herstellung eines elektrischen Kondensators ist erfindungsgemäß dadurch gekennzeichnet, daß in den vorgefertigten Kunststoffbecher zunächst in wenigstens zwei Seitenflächen oder wenigstens zwei Kanten des Kunststoffbechers die zentrierenden Einprägungen erzeugt werden, wonach der Kondensator in den Kunststoffbecher eingesetzt und durch die dann bereits vorhandenen zentrierenden Einprägungen zentriert und fixiert wird, und anschließend die Verfahrensschritte des Ausfüllens mit Vergußmaterial und des Aushärtens desselben vorgenommen werden.

Ein anderes Verfahren zur Herstellung eines Kondensators ist dadurch gekennzeichnet, daß diese den Kondensator im Kunststoffbecher fixierenden und zentrierenden Einprägungen mittels taktweise arbeitender Prägestempel erzeugt werden.

Ein anderes vorteilhaftes Verfahren zur Herstellung eines elektrischen Kondensators ist dadurch gekennzeichnet, daß diese den Kondensator im Kunststoffbecher fixierenden und zentrierenden Einprägungen mittels kontinuierlich laufender Prägeräder erzeugt werden.

Der Vorteil der Erfindung besteht unter anderem darin, daß der Kondensator, ohne irgendeine zusätzliche Führungslippe oder Lasche am Bechergehäuse mittig im Gehäuse zentriert und gleichzeitig fixiert ist und damit beim Vergießen seine Lage nicht verändern kann, wobei auch sichergestellt ist, daß die Gießharzfüllung zwischen Kondensator und Becherwand gleichmäßig ist und kein Einbauraumverlust für den Wickel eintritt.

Ein Ausführungsbeispiel der Erfindung ist in der Zeichnung dargestellt und wird im folgenden näher beschrieben. Es zeigen:

FIG 1    einen Querschnitt durch einen fertigen Kondensator,

FIG 2    eine Ansicht auf die Schmalseite desselben Kondensators,

FIG 3    den Kondensator mit Blick auf die Becheröffnung,

FIG 4    im Detail eine Becherwandverstärkung,

FIG 5    einen Kondensator mit kantengeprägtem Becher,

FIG 6    denselben Kondensator, von der Becheröffnungsseite her,

FIG 7    eine andere Ausführungsform eines Kondensators im Becher,

FIG 8    eine Ansicht der Schmalseite desselben Kondensators.

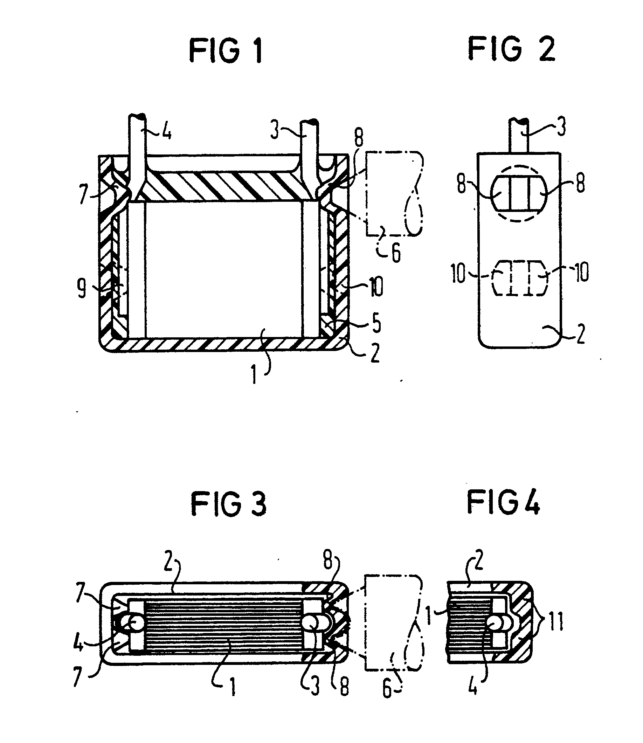

FIG 1 zeigt einen Kondensator 1 in einem Kunststoffbecher 2, der mittels Seiteneinprägungen 7, 8 im Kunststoffbecher 2 fixiert und zentriert ist. Die Seiteneinprägung 8 erfolgt dabei mittels eines Prägestempels 6, während der für die Seiteneinprägung 7 benötigte Stempel nicht gezeichnet ist. Die Seiteneinprägungen 7 und 8 liegen dabei symmetrisch zu den Zuleitungsdrähten 3 und 4. Über zusätzliche Einprägungen 9 und 10 kann, falls gewünscht, ein verstärkter Halt des Kondensators 1 im Kunststoffbecher 2 erreicht werden. Dies kann insbesondere wünschenswert sein, wenn, wie in FIG 1, die Seiteneinprägungen 7 und 8 zu einem Großteil oberhalb der Oberkante des Kondensators liegen und dadurch ein Herausrutschen des Kondensators 1 aus dem Kunststoffbecher 2 verhindern. Beim Vergießen mit dem Vergußmaterial 5 kann es nämlich sonst geschehen, daß der Kondensator aufschwimmt und damit die ursprüngliche Zentrierung verloren geht. Vorteilhaft ist, daß bei einer Prägung auf den kleinen Becherseitenflächen die Prägung auf die rauhen Schoopflächen des Wickels trifft und dadurch eine gute Verankerung bewirkt.

In FIG 2 ist eine Seitenansicht desselben Kondensators auf die Schmalseite gezeigt. Man erkennt, daß die Seiteneinprägung 8 zweiteilig ist, wobei die beiden Teile symmetrisch um den Stromzuführungsdraht 3 liegen. Die zusätzlichen, möglichen Einprägungen 10 sind strichliert angedeutet.

In FIG 3 ist derselbe Kondensator 1 mit Blick auf die offene Seite des Kunststoffbechers 2 gezeigt. Das symmetrische Ausrichten des Kondensators 1 im Kunststoffbecher 2 ist durch die zentrierende Form des Prägestempels 6 gewährleistet. Durch die parabelförmige Ausnehmung am vorderen Ende des Prägestempels 6 ist gewährleistet, daß der Stromzuführungsdraht 3 genau mittig zum Becher 2 ausgerichtet wird. Damit der Kondensator 1 sich nicht nach rechts oder links verschiebt, ist es erforderlich, daß gleichzeitig mit der Seiteneinprägung 8 auch die Seiteneinprägung 7 erfolgt, wobei der Prägestempel für die Seiteneinprägung 7 ebenso geformt sein muß, wie es der Prägestempel 6 ist. Diese Prägestempelform ist auch für die Erzeugung der zusätzlichen Einprägungen 9 und 10 von FIG 1 geeignet.

Durch eine Becherwandverstärkung 11, wie in FIG 4 gezeigt, kann sich, je nach dem Material des verwendeten Kunststoffbechers 2, ein verbesserter Halt des Kondensators 1 im Kunststoffbecher 2 ergeben. Außerdem können tiefere Prägungen - wie sie für kleinere Wickel (Wickeltoleranz) erforderlich sind - erzeugt werden, ohne daß ein Aufreißen des Bechers im Bereich der Prägung auftritt. Die Becherwandverstärkung 11 muß allerdings so ausgeführt sein, daß die zentrierende Wirkung des Prägestempels nicht gefährdet wird. Die Becherwandverstärkung dient insbesondere dazu, die Festigkeit und Beibehaltung der Form des Bechers während des Prägevorganges sicherzustellen.

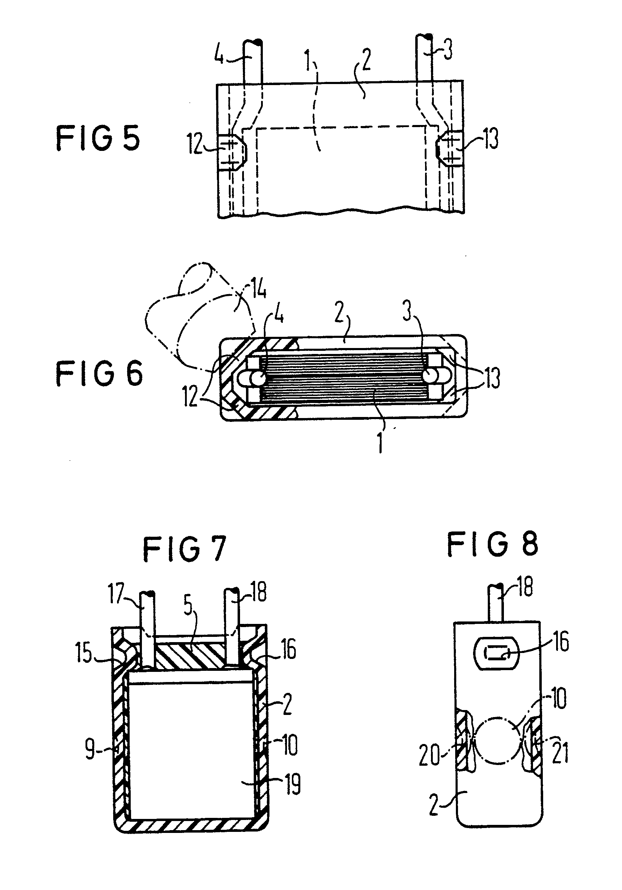

Ist es nicht gewährleistet, daß die Stromzuführungsdrähte 3, 4 des Kondensators 1 genau in der Mitte der Schmalseiten des Kondensators liegen, empfiehlt sich eine Kanteneinprägung 12, 13, wie sie in FIG 5 gezeigt ist. Die Möglichkeit zusätzlicher Einprägungen in die Seiten des Bechers 2 bleibt davon unberührt.

In FIG 6 ist eine Ansicht der offenen Seite des Bechers 2 vom Kondensator 1 der FIG 5 dargestellt. Durch die Kanteneinprägungen 12, 13 wird eine gleichzeitige Zentrierung und Fixierung des Kondensators 1 im Kunststoffbecher 2, unabhängig von der Lage der Stromzuführungsdrähte 3, 4, erreicht. Die gleichzeitige Zentrierung und Fixierung des Kondensators 1 kann dabei entweder durch vier Prägestempel (14), von denen nur einer gezeigt ist, erreicht werden. Aber auch die Verwendung zweier Prägestempel 6, wie sie aus FIG 3 bekannt sind, mit einer entsprechend größeren parabelförmigen Ausnehmung, ist möglich. Eine Zentrierung erfolgt jedoch immer nur dann, wenn die paarweisen Kanteneinprägungen 13 und 12 gleichzeitig vorgenommen werden. Selbstverständlich ist auch eine Kombination einer Einprägung 7 mit einer Einprägung 13 möglich.

Das Einbringen des Kondensators in den Becher mit anschliessendem Zentrieren und Fixieren durch Einprägungen ist vor allem dann vorteilhaft, wenn unterschiedliche Abmessungen der Kondensatoren vorliegen. Sind hingegen die Ausmaße der Kondensatoren nahezu identisch, so kann es vorteilhaft sein, den Becher zuerst mit Einprägungen zu versehen, indem während des Prägevorganges ein Stempel in den Becher eingeführt wird, dessen Breite und Tiefe geringfügig kleiner als die entsprechenden Abmessungen des kleinstmöglichen Kondensators sind, und dann erst den Kondensator in den Becher einzuführen. In FIG 7 ist ein solcher Becher 2 gezeigt, der zusätzliche Einprägungen 9, 10 aufweist. Der Kondensator 19 weist Stromzuführungsdrähte 17, 18 auf, die auf derselben Randfläche des Kondensators 19 sich befinden, wie er beispielsweise aus der DE-OS 33 42 329 bekannt ist. Die Einprägungen 15, 16 verhindern ein Aufschwimmen des Kondensators 19 beim Vergießen mit der Vergußmasse 5. Dadurch, daß die Einprägungen 15, 16 den Kondensator 19 teilweise überragen, ist ein sicherer Sitz des Kondensators 19 im Kunststoffbecher 2 gewährleistet.

FIG 8 gibt eine Ansicht auf die Schmalseite des Kondensators aus FIG 7 wieder. In den Kunststoffbecher 2 ist die Einprägung 16 eingebracht worden, die wieder symmetrisch zum Anschlußdraht 18 liegt, ihn aber diesmal, im Gegensatz zur FIG 2, nicht umschließt. Zur Zentrierung des Kondensators im Kunststoffbecher 2 dienen die zusätzlichen Einprägungen 10, 20 und 21. Sie sind strichliert gezeichnet, da sowohl Form als auch Lage jeder Einprägung den Umständen entsprechend zu wählen ist und eine Kanteneinprägung gegebenenfalls vorteilhafter sein kann. Zur Erzeugung der Einprägungen können beheizte oder nicht beheizte Stempel, oder auch ultraschallerregte Stempel verwendet werden. Weiterhin kann das zu verformende Gebiet mit Warmluftdüsen erwärmt und dann über Prägestempel oder Prägeräder geprägt werden.

## Patentansprüche

1. Elektrischer Kondensator (1) mit wenigstens nahezu rechteckigem Querschnitt, der zentriert und justiert in einem Gehäuse in Form eines mit einer Öffnung versehenen Kunststoffbechers (2), der Auswölbungen in wenigstens zwei gegenüberliegenden Seiten flächen besitzt, mit rechteckigem Querschnitt untergebracht ist, Stromzuführungsdrähte (3,4) aufweist, die aus der Öffnung des Kunststoffbechers (2) herausragen, und der in dem Kunststoffbecher (2) mit ausgehärtetem Material festgelegt ist, **dadurch gekennzeichnet,** daß die Auswölbungen aus zu einem Großteil oberhalb der Oberkante des Kondensators (1) liegende Seiteneinprägungen (7, 8) bestehen und/oder der kunststoffbecher (2) Einprägungen (12,13) in allen vier von den Becherseitenflächen gebildeten Kanten besitzt.

2. Elektrischer Kondensator nach Anspruch 1, **dadurch gekennzeichnet,** daß der Kondensator (1) durch im Bereich der Einprägungen (7, 8, 12, 13) erhöhte Materialstärke des Kunststoffbechers (2) zentriert und fixiert ist.

3. Verfahren zur Herstellung eines elektrischen Kondensators nach einem der Ansprüche 1 oder 2, bei dem der Kondensator (1) in einen vorgefertigten Kunststoffbecher (2) mit rechteckigem Querschnitt eingesetzt, die Hohlräume zwischen Kunststoffbecher (2) und Kondensator (1) mit flüssigem, aushärtbarem Vergußmaterial ausgefüllt werden und dieses Vergußmaterial danach ausgehärtet wird, **dadurch gekennzeichnet,** daß nach dem Einsetzen des Kondensators in den Kunststoffbecher (2) zunächst zentrierende Einprägungen (9, 10, 20, 21 oder 12, 13) in wenigstens zwei Seitenflächen oder wenigstens zwei Kanten des Kunststoffbechers (2) erzeugt werden, durch die der Kondensator zentriert und fixiert wird, wonach die weiteren Verfahrensschritte des Ausfüllens mit Vergußmaterial (5) und des Aushärtens desselben erfolgen.

4. Verfahren zur Herstellung eines elektrischen Kondensators nach einem der Ansprüche 1 oder 2, bei dem der Kondensator (1) in einen vorgefertigten Kunststoffbecher (2) mit rechteckigem Querschnitt eingesetzt, die Hohlräume zwischen Kunststoffbecher (2) und Kondensator mit flüssigem, aushärtbarem Vergußmaterial (5) ausgefüllt werden und dieses Vergußmaterial (5) danach ausgehärtet wird, **dadurch gekennzeichnet,** daß in den vorgefertigten Kunststoffbecher (2) zunächst in wenigstens zwei Seitenflächen oder wenigstens zwei Kanten des Kunststoffbechers (2) die zentrierenden Einprägungen (9, 10, 20 21 oder 12, 13) erzeugt werden, wonach der Kondensator (1) in den Kunststoffbecher (2) eingesetzt und durch die dann bereits vorhandenen zentrierenden Einprägungen (9, 10, 20, 21 oder 12, 13) zentriert und fixiert wird, und anschließend die Verfahrensschritte des Ausfüllens mit Vergußmaterial (5) und des Aushärtens desselben vorgenommen werden.

5. Verfahren zur Herstellung eines Kondensators nach einem der Ansprüche 3 oder 4, **dadurch gekennzeichnet,** daß die den Kondensator (1) im Kunststoffbecher (2) fixierenden und zentrierenden Einprägungen (9, 10, 20, 21 oder 12, 13) mittels taktweise arbeitender Prägestempel erzeugt werden.

6. Verfahren zur Herstellung eines Kondensators nach einem der Ansprüche 3 oder 4, **dadurch gekennzeichnet,** daß die den Kondensator (1) im Kunststoffbecher (2) fixierenden und zentrierenden Einprägungen (9, 10, 20, 21 oder 12, 13) mittels kontinuierlich laufender Prägeräder erzeugt werden.

**Claims**

1. Electrical capacitor (1) having an at least virtually rectangular cross-section, which is accommodated, centred and adjusted, in a casing in the form of a plastic cup-shaped container (2) having a rectangular cross-section, provided with an opening and having bulges in at least two opposite side surfaces, which capacitor (1) is secured in the plastic cup-shaped container (2) by cured material and has current supply wires (3, 4), which protrude out of the opening of the plastic cup-shaped container (2), characterised in that the bulges consist of side impressions (7, 8) located to a major extent above the upper edge of the capacitor (1) and/or the plastic cup-shaped container (2) has impressions (12, 13) in all four edges formed at the container side surfaces.

2. Electrical capacitor according to Claim 1, characterised in that the capacitor (1) is centred and fixed by means of increased thickness of the material of the plastic cup-shaped container (2) in the region of the impressions (7, 8, 12, 13).

3. Method of making an electrical capacitor according one of Claims 1 or 2, in which the capacitor (1) is inserted in a prefabricated plastic cup-shaped container (2) having a rectangular cross-section, the hollow spaces between the plastic cup-shaped container (2) and the capacitor (1) are filled with liquid, curable cast material and this cast material is subsequently cured, characterised in that, after insertion of the capacitor in the plastic cup-shaped container (2), centering impressions (9, 10, 20, 21 or 12, 13,) are first produced in at least two side surfaces or at least two edges of the plastic cup-shaped container (2), by means of which the capacitor is centred and fixed, after which the further method steps of filling with cast material (5) and curing of the aforesaid material are carried out.

4. Method of making an electrical capacitor according to one of Claims 1 or 2, in which the capacitor (1) is inserted in a prefabricated plastic cup-shaped container (2) having a rectangular cross-section, the hollow spaces between the plastic cup-shaped container (2) and the capacitor (1) are filled with liquid, curable cast material (5) and this cast material (5) is subsequently cured, characterised in that, in the prefabricated plastic cup-shaped container (2), the centering impressions (9, 10, 20, 21 or 12, 13) are first produced in at least two side surfaces or at least two edges of the plastic cup-shaped container (2), after which the capacitor (1) is inserted in the plastic cup-shaped container (2) and is centered and fixed by means of the centring impressions (9, 10, 20, 21 or 12, 13), which are then already present, and the method steps of filling with cast material (5) and curing of the aforesaid material are carried out subsequently.

5. Method of making a capacitor according to one of Claims 3 or 4, characterised in that the fixing and centring impressions (9, 10, 20, 21 or 12, 13) fixing and centring the capacitor (1) in the plastic cup-shaped container (2) are produced by means of a stamping die operating in a cyclic manner.

6. Method of making a capacitor according to one of Claims 3 or 4, characterised in that the impressions (9, 10, 20, 21, or 12, 13) fixing and centering the capacitor (1) in the plastic cup-shaped container (2) are produced by means of continuously running stamping wheels.

## Revendications

1. Condensateur électrique (1) possédant une section transversale au moins approximativement rectangulaire et qui est logée, d'une manière centrée et ajustée, dans un boîtier de la forme d'un pot en matière plastique (2) à section transversale rectangulaire, pourvu de deux cavités cintrées dans au moins deux surfaces latérales opposées, et possède des fils d'alimentation en courant (3,4), qui sortent de l'ouverture du pot en matière plastique (2), et est fixé dans ce pot (2) au moyen d'un matériau durci, caractérisé par le fait que les cavités cintrées sont formées par des renfoncements latéraux (7,8) situés pour une part importante au-dessus du bord supérieur du condensateur (1) et/ou que le pot en matière plastique (2) possède des parties rentrantes (12,13) ménagées dans tous les quatre bords formés par les surfaces latérales du pot.

2. Condensateur électrique suivant la revendication 1, caractérisé par le fait que le condensateur (1) est centré et fixé au moyen d'une épaisseur du matériau du pot en matière plastique (2), qui est accrue dans la zone des parties rentrantes (7,8,12,13).

3. Procédé pour fabriquer un condensateur électrique suivant l'une des revendications 1 ou 2, selon lequel on insère le condensateur (1) dans un pot préfabriqué en matière plastique (2) possédant une section transversale rectangulaire, on remplit les cavités présentes entre le pot en matière plastique (2) et le condensateur (1) avec un matériau de scellement liquide durcissable et on fait durcir ce matériau de scellement, caractérisé par le fait qu'après l'insertion du condensateur dans le pot en matière plastique (2), on forme tout d' abord, dans au moins deux surfaces latérales ou au moins deux bords du pot en matière plastique (2), des parties rentrantes de centrage (9,10,20,21 ou 12,13), qui centrent et fixent le condensateur, à la suite de quoi on exécute les étapes opératoires suivantes de remplissage avec le matériau de scellement (5) et de durcissement de ce matériau.

4. Procédé pour fabriquer un condensateur électrique suivant les revendications 1 ou 2, selon lequel on insère le condensateur (1) dans un pot préfabriqué en matière plastique (2) possédant une section transversale rectangulaire, on remplit les cavités présentes entre le pot en matière plastique (2) et le condensateur (1) avec un matériau de scellement liquide durcissable et on fait durcir ce matériau de scellement, caractérisé par le fait qu'on aménage tout d'abord dans au moins deux surfaces latérales ou au moins deux bords du pot en matière plastique préfabriqué (2), les parties rentrantes de centrage (9,10,20,21 ou 12,13), à la suite de quoi on insère le condensateur (1) dans le pot en matière plastique (2), et on le centre et on le fixe au moyen des parties rentrantes de centrage (9,10,20,24 ou 12,13) déjà présentes, et on exécute ensuite les étapes opératoires de remplissage avec le matériau de scellement (5) et de durcissement de ce matériau.

5. Procédé pour fabriquer un condensateur suivant l'une des revendications 3 ou 4, caractérisé par le fait qu'on forme les parties rentrantes (9,10,20,21 ou 12,13), qui fixent et centrent le condensateur (1) dans le pot en matière plastique (2), au moyen de poinçons à empreinte travaillant de façon cadencée.

6. Procédé pour fabriquer un condensateur suivant les revendications 3 ou 4, caractérisé par le fait qu'on forme les parties rentrantes (9,10,20,21 ou 12,13), qui fixent et centrent le condensateur (1) dans le pot en matière plastique (2), au moyen de roues à empreinte tournant de façon continue.

# FIG 1

# FIG 2

# FIG 3

# FIG 4

FIG 5

FIG 6

FIG 7

FIG 8